# EUROPÄISCHE PATENTSCHRIFT

(11) **EP 1 814 809 B1**
(45) Veröffentlichungstag und Bekanntmachung des Hinweises auf die Patenterteilung: **10.06.2009**
(21) Anmeldenummer: 05810653.5
(22) Anmeldetag: 24.10.2005
(51) Int. Cl.: B65G 1/137

(54) **VERFAHREN UND VORRICHTUNG ZUR ÜBERPRÜFUNG DER BELADUNG EINER TRANSPORTVORRICHTUNG MIT GEGENSTÄNDEN**
METHOD AND DEVICE FOR CHECKING THE LOADING OF A TRANSPORT DEVICE WITH OBJECTS
PROCEDE ET DISPOSITIF POUR VERIFIER LE CHARGEMENT D'UN DISPOSITIF DE TRANSPORT CONTENANT DES MARCHANDISES

(30) Priorität: 25.10.2004 DE 102004051938
(43) Veröffentlichungstag der Anmeldung: 08.08.2007
(73) Patentinhaber: Deutsche Post AG, 53113 Bonn (DE)
(72) Erfinder: TABELLION, Wolfgang, 54310 Ralingen (DE); HAMMEN, Martin, 54296 Trier (DE)
(74) Vertreter: Jostarndt, Hans-Dieter
(86) Internationale Anmeldenummer: PCT/EP2005/011386
(87) Internationale Veröffentlichungsnummer: WO 2006/045569

(56) Entgegenhaltungen:
- EP-A- 0 439 355
- WO-A-03/057598
- DE-A1- 10 209 864

## Beschreibung

Die Erfindung betrifft ein Verfahren zur Überprüfung der Beladung einer Transportvorrichtung, wobei die Transportvorrichtung mit einem oder mehreren Gegenständen beladen ist. Die Gegenstände sind mit einem Identifikationsmittel versehen, wobei in einem Identifikationsmittel wenigstens Informationen über den Zielort des jeweiligen Gegenstands hinterlegt sind.

Die Erfindung betrifft ferner eine Vorrichtung zur Durchführung eines Verfahrens zur Überprüfung der Beladung einer Transportvorrichtung.

Bei der Zusammenstellung und dem gemeinsamen Transport von Gegenständen ist es bekannt, die Gegenstände jeweils mit einem Identifikationsmittel zu versehen, in welchem neben Informationen über den Gegenstand auch der Zielort des Gegenstands hinterlegt ist. Diese Art der Kennzeichnung bietet sich beispielsweise innerhalb von Logistik- bzw. Versandsystemen oder im Bereich der Kommissionierung von Waren an. Als Identifikationsmittel sind beispielsweise Barcodes oder RFID-Transponder bekannt.

Insbesondere im postalischen Bereich werden Behälter zum Transport von Postsendungen mit einem Infoträger versehen, welcher diverse Informationen wie den Inhalt des Behälters, das Format der Sendung, die Bearbeitungsform, die nächste Bearbeitungsmaschine oder ein nächstes Briefzentrum enthalten kann. Diese Informationen werden für die visuelle Erkennung durch Bedienstete als Klarschriftaufdruck aufgebracht und werden ergänzt durch einen Barcode, in welchem die Informationen gegebenenfalls mit weiteren Informationen verschlüsselt sind. Auch Transportvorrichtungen wie Behälterwagen werden üblicherweise mit Infoträgern versehen, die ebenfalls einen Barcode aufweisen können.

In den einzelnen Bearbeitungsmodulen beim Transport der Behälter mit den Postsendungen werden die Infoträger an den Behältern gelesen und ein- bzw. ausgescannt. Dies geschieht vorrangig zur Steuerung der Behälter, für eine Produktionsanalyse und zu statistischen Zwecken. Da in den Infoträgern Informationen über den Zielort eines Behälters enthalten sind, bietet sich die Verwertung dieser Informationen ferner für die Überprüfung der Beladung von Transportwagen an, auf welche mehrere Behälter mit dem gleichen Ziel geladen werden. Werden Behälter von Bediensteten nach dem Zielort sortiert auf jeweils unterschiedlichen Behälterwagen abgestellt, kann der Fall eintreten, dass ein Behälter auf einem falschen Wagen abgestellt und somit zum falschen Ziel transportiert wird. Da sich durch diesen Fehler die Transportzeit mehrerer Sendungen zu ihrem korrekten Zielort erheblich verlängert, wird im postalischen Betrieb eine Vermeidung dieses Falles angestrebt.

Eine Möglichkeit der Vermeidung von falschen Zielorten ist das visuelle Kontrollieren der Behälterzielorte durch Bedienstete oder das Einscannen der Barcodes aller Behälter. Die visuelle Kontrolle der Klarschriftaufdrucke eines Infoträgers ist jedoch nicht nur zeitaufwändig, sondern auch fehlerhaft und das einzelne Einscannen der Barcodes stellt einen weitaus größeren Aufwand dar.

In verschiedenen Bereichen der Logistik sind daher Lösungen zur Überprüfung von Transportzielen oder Inhalten von Behältern bekannt, bei denen damit verbundene Identifikationsmittel erfasst und mit Sollwerten verglichen werden. Beispielsweise beschreibt die deutsche Gebrauchsmusterschrift DE 202 00 411 U1 eine Vorrichtung zum Erkennen und Steuern von mit einem Code versehenen Stückgütern in einer Kommissionieranlage. Dabei sind die Stückgüter mit Transpondern versehen und werden nacheinander auf einem Förderband durch einen Scan-Tunnel befördert, wobei der im Transponder gespeichert Code erfasst und mit Solldaten verglichen wird. Ein derartiges System mit Transpondern ist für Transportwagen, auf welchen mehrere Behälter nebeneinander und übereinander gestapelt sind, jedoch nur mit großem technischen Aufwand durchführbar. Ferner ist so nicht erkennbar, dass ein Transponder nicht funktionsfähig ist, so dass sich hohe Fehlerraten ergeben.

Die deutsche Offenlegungsschrift DE 102 09 864 A1 offenbart ein Verfahren und eine Vorrichtung zum Erkennen und Steuern von mit einem Code versehenen Stückgutern, bei dem die in einem Behälter kommissionierten Waren aus dem Behälter entnommen und vereinzelt und zentriert durch einen Scan-Tunnel geleitet werden. Die Stückgüter sind mit Barcdes versehen, die innerhalb des Scan-Tunnels durch mehrere auf dem Umfang des Tunnels verteilte Scanner erfasst werden. Die erfassten Daten werden mit gespeicherten Soll-Daten des zugehörigen Behälters verglichen.

Die deutsche Patentschrift DE 39 00 978 C2 offenbart ferner eine Einrichtung zum Identifizieren von längs einer Bahn bewegten Gegenständen, bei dem die Gegenstände mit einem Informationsträger versehen sind, in welchem sich mehrere übereinander liegende Reihen aus Öffnungen befinden. Der ... Informationsträger wird zur Erkennung des Gegenstands an einer Leseeinrichtung mit drei ebenfalls übereinander angeordneten Lichtschranken vorbeigeführt, so dass die Lichtschranken die Lochmarkierungen abtasten können.

Die internationale Patentanmeldung WO 03/057598 A1 beschreibt ferner ein Verfahren und eine Vorrichtung zur Erkennung und Steuerung von mit einem Code versehenen Stückgütern in einer Kommissionieranlage. Die Stückgüter sind mit einem Transponder versehen und werden auf einem Band durch einen Scan-Tunnel geführt. Durch die Transponder kann auf die Verwendung von optisch erfassbaren Strichcodes verzichtet werden.

Aus der europäischen Patentanmeldung EP 0 439 355 A2 ist ein System zur Zusammenstellung von pharmazeutischen Paketen mit Medikamenten bekannt. Dabei werden mehrere Packungen mit jeweils dem gleichen Inhalt an Haltemittel gelagert. Jede Packung ist mit einer ID wie beispielsweise einem Barcode versehen, welche wenigstens den Inhalt kennzeichnet. Fordert ein Arzt Medikamente für einen Patienten an, wird diese Bestellung in das System eingestellt und ein Behälter für die Patientenbestellung bereitgestellt. Der Behälter weist ebenfalls einen Barcode auf, der die Patientenbestellung kennzeichnet. Der Behälter-Barcode wird eingelesen und anhand der Bestellung automatisch von einem Roboterarm die entsprechenden Medikamentenpackungen aus den Haltemitteln entnommen und in den Behälter gefüllt. Dabei wird zuvor von einem Scanner der Barcode auf der Medikamentenpackung eingelesen, um dadurch zu bestätigen, dass es sich um die richtige Packung handelt. Nach der Befüllung wird der Behälter auf einem Förderband zu einer Prüfstelle transportiert, an der eine Person mit einem Scanner überprüft, ob die Bestellung korrekt in den Behälter kommissioniert wurde. Dazu werden der Behälter-Barcodes und die einzelnen Barcodes der Medizinpackungen beispielsweise mit einem Handscanner eingescannt.

Aufgabe der Erfindung ist es, ein Verfahren zur Überprüfung der Beladung einer Transportvorrichtung mit Gegenständen mit jeweils einem Barcode bereit zu stellen, bei dem überprüft wird, ob der Zielort aller geladenen Gegenstände dem Zielort der Transportvorrichtung entspricht und ob Gegenstände ohne oder mit einem nicht-lesbaren Barcode auf der Transportvorrichtung geladen sind. Das Verfahren soll sich insbesondere zur Überprüfung von Transportwagen mit mehreren Behältern eignen, in denen Postsendungen für jeweils einen gemeinsamen Zielort gelagert sind.

Aufgabe der Erfindung ist es ferner, eine Vorrichtung zur Durchführung des Verfahrens bereit zu stellen.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2-19. Die Aufgabe wird ferner durch eine Vorrichtung nach Anspruch 20 gelöst. Vorteilhafte Ausführungsformen der Vorrichtung ergeben sich ebenfalls aus den Unteransprüchen 21-25.

Das erfindungsgemäße Verfahren zur Überprüfung der Beladung einer Transportvorrichtung, bei dem die Transportvorrichtung mit einem oder mehreren Gegenständen beladen ist und die Gegenstände mit einem vorzugsweise optisch erfassbaren. Identifikationsmittel versehen sind, wobei in einer besonders bevorzugten Ausführungsform alle Identifikationsmittel zur gleichen Seite ausgerichtet sind und in einem Identifikationsmittel wenigstens Informationen über den Zielort des jeweiligen Gegenstands hinterlegt sind, sieht. verschiedene Schritte vor. Dazu gehören das Erfassen des Zielortes der Transportvorrichtung und das Vorbeiführen der Transportvorrichtung zusammen mit den Gegenständen an einer Scan-Einrichtung, wobei die Scan-Einrichtung die Identifikationsmittel mit wenigstens zwei übereinander angeordneten Scannern erfasst. Um die Identifikationsmittel vorzugsweise optisch mit den Scannern erfassen zu können, ist die Transportvorrichtung wenigstens zu einer Seite offen ausgebildet oder verfügt über Öffnungen, durch welche die Strahlen der Scanner hindurchtreten können.

Alternativ ist eine Erfassung mit elektromagnetischer Strahlung anderer Wellenlängenbereiche möglich, beispielsweise mit UV, IR oder Radiofrequenzen; dies gilt insbesondere bei einem Einsatz von Transpondern.

Die erfassten Informationen der Identifikationsmittel werden zu einer Auswerteeinheit übermittelt und in dieser ausgewertet, wobei der jeweils in den Identifikationsmitteln enthaltene Zielort ermittelt wird. Der jeweilige erfasste Zielort eines Gegenstands wird mit dem Zielort der Transportvorrichtung verglichen und ein erste Signal A durch die Auswerteeinheit erzeugt, falls ein über ein Identifikationsmittel erfasster Zielort eines Gegenstands nicht mit dem Zielort der Transportvorrichtung übereinstimmt.

Das erste Signal A der Auswerteeinheit wird vorzugsweise in eine von einem Nutzer wahrnehmbare Information umgesetzt, wobei es sich beispielsweise um ein akustisches Signal und/oder eine visuelle Anzeige auf einem Anzeigegerät handeln kann. Die Auswerteeinheit erzeugt ferner eine Information, welcher Gegenstand ein Identifikationsmittel aufweist, das einen Zielort enthält, der nicht dem Zielort der Transportvorrichtung entspricht. Diese Information wird vorzugsweise visuell auf einem Anzeigegerät angezeigt.

Zur Erfassung des Zielortes der Transportvorrichtung ist dieser in einem besonders bevorzugten Ausführungsbeispiel der Erfindung ein weiteres Identifikationsmittel zugeordnet, in welchem der Zielort der Transportvorrichtung hinterlegt ist. Dieses Identifikationsmittel wird vor oder nach dem Vorbeiführen an der Scan-Einrichtung durch ein mobiles Scangerät oder automatisch beim Vorbeiführen an der Scan-Einrichtung durch einen separaten Scanner erfasst. Der Zielort der Transportvorrichtung kann ferner vor oder nach jedem Vorbeiführen der Transportvorrichtung an der Scan-Einrichtung manuell durch einen Nutzer eingegeben werden oder er ist fest in der Auswerteeinheit gespeichert.

Das erfindungsgemäße Verfahren wird in einem besonders bevorzugten Ausführungsbeispiel durch weitere vorteilhafte Merkmale ergänzt. Beispielsweise wird beim Vorbeifahren der Transportvorrichtung mit den Gegenständen an der Scan-Einrichtung zusätzlich die Beladungshöhe der Gegenstände erfasst, wobei die Scan-Einrichtung die Gegenstände mit wenigstens zwei übereinander angeordneten Lichtschranken abtastet. Die so erfassten Informationen über die Beladungshöhe werden ebenfalls an die Auswerteeinheit übermittelt und mit in der Auswerteeinheit vorliegenden Informationen über die Größen der zu den erfassten Identifikationsmitteln gehörenden Gegenstände verglichen. Für den Fall, dass eine Plausibilitätsüberprüfung ergibt, dass in einem Bereich der Transportvorrichtung ein Gegenstand positioniert ist, welcher kein oder ein nicht-lesbares Identifikationsmittel aufweist, wird durch die Auswerteeinheit ein zweites Signal B erzeugt.

Auch das zweite Signal B wird in eine von einem Nutzer wahrnehmbare Information umgesetzt, dass in einem Bereich der Transportvorrichtung ein Gegenstand positioniert ist, welcher kein oder ein nicht-lesbares Identifikationsmittel aufweist. Die Auswerteeinheit erzeugt ferner eine Information, in welchem Bereich der Transportvorrichtung sich ein Gegenstand mit keinem oder einem nicht-lesbaren Identifikationsmittel befindet und die Information wird auf einem Anzeigegerät angezeigt.

Bei den zu überprüfenden Gegenständen handelt es sich vorzugsweise um Behälter und bei der Transportvorrichtung um einen Behälterwagen, auf welchem mehrere Behälter gestapelt sind. Wird das erfindungsgemäße Verfahren im postalischen Bereich eingesetzt, handelt es sich typischerweise um Behälter, in welche Postsendungen mit jeweils dem gleichen Transportziel eingebracht sind. Die Gegenstände können von unterschiedlicher Größe sein, wobei die Identifikationsmittel Informationen über die Größe der jeweiligen Gegenstände enthalten und die durch die Scan-Einrichtung erfassten Informationen über die Größe an die Auswerteeinheit übermittelt und in dieser verarbeitet werden. Sind alle Gegenstände von gleicher Größe, kann die Größe in die Auswerteeinheit eingegeben und in dieser gespeichert werden.

In einem weiteren besonders bevorzugten Ausführungsbeispiel der Erfindung wird die Scan-Einrichtung nach der Erzeugung eines Signals durch die Auswerteeinheit, dass ein über ein Identifikationsmittel erfasster Zielort eines Gegenstands nicht mit dem Zielort der Transportvorrichtung übereinstimmt und/oder dass in einem Bereich der Transportvorrichtung ein Gegenstand positioniert ist, welcher kein oder ein nicht-lesbares Identifikationsmittel aufweist, für den weiteren Betrieb gesperrt. Zur Entsperrung der Vorrichtung können verschiedene Verfahren vorgesehen sein. Die Entsperrung der Scan-Einrichtung kann beispielsweise eine manuelle Eingabe eines Nutzers oder das erneute Vorbeiführen der als fehlerhaft beladen erkannten Transportvorrichtung an der Scan-Einrichtung erfordern.

Die Auswerteeinheit erstellt zweckmäßigerweise ein Protokoll über die Signale A und B und die von der Scan-Einrichtung erfassten Informationen über die Zielorte der Gegenstände bzw. der Transportvorrichtung werden einem zentralen Verwaltungssystem übermittelt.

Die Erfindung umfasst ferner eine Vorrichtung zur Durchführung eines Verfahrens zur Überprüfung der Beladung einer zu wenigstens einer Seite offenen Transportvorrichtung, wobei die Transportvorrichtung mit einem oder mehreren Gegenständen beladen ist und die Gegenstände mit einem optisch erfassbaren Identifikationsmittel versehen sind. Die Vorrichtung weist eine Scan-Einrichtung mit einem Gehäuse auf, in welchem mehrere übereinander angeordnete Scanner positioniert sind. Die Vorrichtung umfasst ferner ein Mittel zum Erfassen des Zielortes einer Transportvorrichtung, wobei das Mittel in Verbindung mit der Auswerteeinheit steht. Bei dem Mittel zum Erfassen des Zielortes einer Transportvorrichtung kann es sich um einen separaten Scanner handeln, der sich am Gehäuse befindet. Das Mittel kann ferner als mobiles Bauteil losgelöst von dem Gehäuse ausgebildet sein.

Die Auswerteeinheit umfasst zur Auswertung der von den Scannern erfassten Signale Rechenmittel zum Vergleich der erfassten Zielorte der Gegenstände mit dem Zielort der Transportvorrichtung und Alarmmittel zum Erzeugen eines ersten Signals A für den Fall, dass der Vergleich ergeben hat, dass ein erfasster Zielort eines Gegenstands nicht mit dem Zielort der Transportvorrichtung übereinstimmt.

In einem besonders bevorzugten Ausführungsbeispiel der Erfindung umfasst die Vorrichtung ferner mehrere übereinander angeordnete Lichtschranken, wobei die Anzahl der Lichtschranken wenigstens der Anzahl der Scanner entspricht. Darüber hinaus sind Mittel zur Erfassung der Größe eines Gegenstands und Rechenmittel zum Vergleich einer mit den Lichtschranken detektierten Beladungshöhe der Gegenstände mit der Größe der erfassten Gegenstände vorgesehen. Ferner umfasst die Vorrichtung Alarmmittel zum Erzeugen eines zweiten Signals B für den Fall, dass der Vergleich ergeben hat, dass ein detektierter Gegenstand kein oder ein nicht-lesbares Identifikationsmittel aufweist.

Die Scan-Einrichtung steht zweckmäßigerweise in Verbindung mit einem Anzeigerät und die Auswerteeinheit umfasst Rechenmittel zur Ermittlung und Darstellung eines Gegenstand auf dem Anzeigegerät, dessen Zielort nicht dem Zielort der Transportvorrichtung entspricht und/oder der kein oder kein lesbares Identifikationsmittel aufweist.

Da beim Vorbeiführen einer Transportvorrichtung mit mehreren Gegenständen an den Scannern der Scan-Einrichtung ein bestimmter Abstand zu den Scannern nicht überschritten werden darf, weist die Scan-Einrichtung Abstandsmittel zum Vorbeiführen der Transportvorrichtung in einem vorgegebenen Abstand zum Gehäuse der Vorrichtung auf. Bei den Abstandsmitteln kann es sich beispielsweise um einen länglichen Rammschutz in einem Abstand zu dem Gehäuse handeln, an welchem die Transportvorrichtung manuell entlang gezogen werden kann. In einem alternativen Ausführungsbeispiel werden als Abstandsmitteln zwei Führungsrillen in einem Abstand zu dem Gehäuse eingesetzt, durch welche die Räder eines Transportwagens bei der Durchführung des Verfahrens manuell gezogen werden.

Der Vorteil des erfindungsgemäßen Verfahrens und der zugehörigen Vorrichtung zur Durchführung des Verfahrens liegt in der effektiven und sicheren Überprüfung der Beladung einer Transportvorrichtung mit Gegenständen, wobei das Verfahren verschiedene fehlerhafte Beladungen auswerten und anzeigen kann. Neben der Information, dass ein fehlerhafter Gegenstand geladen wurde, erhält ein Nutzer ferner die Information, um welchen Gegenstand es sich handelt, so dass er den Gegenstand gezielt entfernen kann. Dabei werden nicht nur Gegenstände mit falschem Zielort angezeigt, sondern verschiedene Ausführungsformen des erfindungsgemäßen Verfahrens ermöglichen darüber hinaus die Feststellung, dass ein Gegenstand kein oder ein nicht-lesbares Identifikationsmittel in Form eines Barcodes aufweist. So können beispielsweise beschädigte Infoträger eines Behälters erneuert werden, bevor sie beim Weitertransport des Behälters zu weiteren Fehlern führen.

Mit dem erfindungsgemäßen Verfahren lässt sich eine große Zahl von Gegenständen gleichzeitig überprüfen, so dass das einzelne Einscannen von Identifikationsmittel ersetzt wird durch ein rationelles und zuverlässiges Verfahren zur Überprüfung von Beladungen von Transportvorrichtungen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein besonders bevorzugtes Ausführungsbeispiel einer Vorrichtung zur Überprüfung der Beladung einer Transportvorrichtung mit Gegenständen; und
- Fig. 2: ein Ausführungsbeispiel für eine Darstellung des Überprüfungsergebnisses auf einem Anzeigegerät.

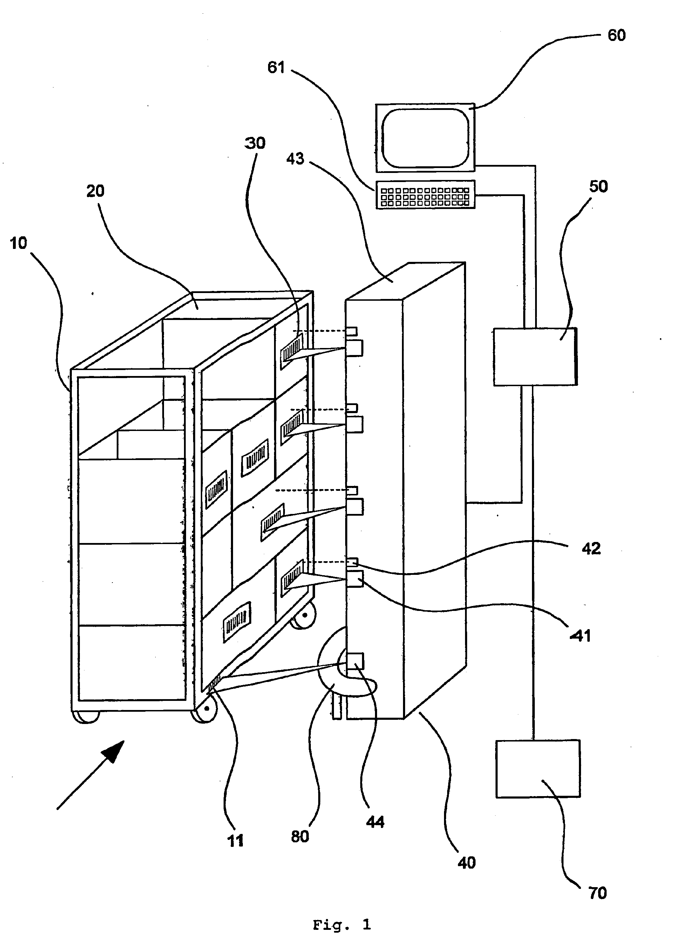

In der Fig. 1 ist ein besonders bevorzugtes Ausführungsbeispiel der erfindungsgemäßen Vorrichtung zur Überprüfung der Beladung einer Transportvorrichtung dargestellt. Das erfindungsgemäße Verfahren mit seinen verschiedenen vorteilhaften Ausführungsformen wird ebenfalls anhand dieser Fig. 1 beschrieben.

Bei der Vorrichtung handelt es sich um eine Scan-Einrichtung 40, welche im Wesentlichen aus einem Gehäuse 43 mit darin montierten Elementen besteht. Die Vorrichtung kann als alleinstehende Einrichtung ausgebildet oder in andere Vorrichtungen integriert sein. Innerhalb des Gehäuses 43 sind auf wenigstens einer Seite der Scan-Einrichtung mehrere Scanner 41 übereinander angeordnet. Um die Auslastung und Flexibilität der Einrichtung zu erhöhen, können auf beiden Seiten der Vorrichtung Scanner angebracht sein, so dass die zu überprüfenden Transportvorrichtungen auf beiden Seiten vorbeigeführt werden können.

Die Scanner 41 sind vorzugsweise jeweils in einer Höhe angebracht, welche der zu erwartenden Höhe eines Identifikationsmittels 30 auf einem Gegenstand 20 entspricht. In dem dargestellten Ausführungsbeispiel handelt es sich bei den Gegenständen 20 um Behälter, welche übereinander und nebeneinander auf einem Transportwagen 10 gestapelt sind. Die Behälter können von unterschiedlicher Größe sein, so dass für jede mögliche vertikale position eines Identifikationsmittels ein Scanner vorgesehen ist. Die Anzahl der Scanner richtet sich nach der maximalen Anzahl der übereinander zu erfassenden Barcodes.

Es hat sich als zweckmäßig erwiesen, den Transportwagen 10 ebenfalls mit einem Identifikationsmittel 11 zu versehen. In dem dargestellten Ausführungsbeispiel befindet sich dieses Identifikationsmittel am Boden des Transportwagens, so dass auf dieser Höhe im unteren Bereich der Scan-Einrichtung ein separater Scanner 44 vorgesehen ist. Das Identifikationsmittel 11 der Transportvorrichtung kann auch in anderen Bereichen der Transportvorrichtung angebracht sein, welche beispielsweise nur mit einem mobilen Handscanner erreichbar sind. In diesem Fall ist der zusätzliche Scanner nicht in das Gehäuse integriert, sondern beispielsweise als Handheld ausgeführt, so dass ein Bediensteter das Identifikationsmittel 11 der Transportvorrichtung manuell einscannen kann.
Das Handheld steht dabei für eine Datenübertragung in Verbindung mit der Scan-Einrichtung 40.

Bei den verwendeten Identifikationsmitteln für die Kennzeichnung der Behälter und der Transportvorrichtung handelt es sich zweckmäßigerweise um Barcodes. Die Barcodes können fest an dem jeweiligen Gegenstand angebracht sein, oder sie sind auf einen Infoträger aufgedruckt, wie es im postalischen Bereich üblich ist. Der Infoträger ist dabei lösbar mit dem Behälter verbunden, was beispielsweise durch den Einschub an einer Behälterseitenwand realisiert werden kann. Je nach Verwendung des Behälters wird bei jedem nächsten Transport- oder Bearbeitungsschritt ein neuer Infoträger mit einem neuen Barcode an der Behälterseitenwand eingeschoben. Der Infoträger weist neben einem Barcode vorzugsweise weitere Informationen in Klarschrift auf.

In dem Barcode eines Identifikationsmittels 30 eines Behälters 20 ist wenigstens der nächste Zielort des Behälters verschlüsselt und hinterlegt. Bei dem Zielort kann es sich insbesondere im postalischen Bereich um die nächste Bearbeitungsstation oder ein Briefzentrum handeln. Neben dem Zielort können weitere Informationen wie beispielsweise das Format der in einem Behälter sortierten Sendungen, die Größe des Behälters und/oder eine Behälter-ID verschlüsselt sein. In dem Barcode eines Identifikationsmittels 11 einer Transportvorrichtung 10 ist ebenfalls wenigstens der Zielort der Transportvorrichtung hinterlegt. Neben dem Zielort können auch hier weitere Informationen wie beispielsweise eine Inventarnummer gespeichert sein.

Bei den verwendeten Scannern 41 handelt es sich vorzugsweise um LCD-Scanner, es können jedoch auch andere Scanner eingesetzt werden. Geeignete Scanner und Verfahren zur Erfassung eines beweglichen Barcodes sind aus dem Stand der Technik bekannt. Die Scanner sind so ausgebildet und angeordnet, dass sie sich auf der Höhe eines zu erfassenden Barcodes befinden. Leichte Abweichungen der Position eines Barcodes, wie es beispielsweise bei verrutschten Infoträgern oder nicht passgenau gestapelten Behältern der Fall sein kann, können jedoch durch geeignete Scanner ausgeglichen werden.

Um eine fehlerfreie Erfassung mehrerer Barcodes zu gewährleisten, darf beim Vorbeiführen eines Barcodes an einem Scanner eine bestimmte Geschwindigkeit nicht überschritten werden. Bei dem erfindungsgemäßen Verfahren hat es sich als zweckmäßig erwiesen, Geschwindigkeiten von 1 m/s nicht zu überschreiten. Ferner darf ein bestimmter Abstand der Identifikationsmittel zu den Scannern nicht überschritten werden. Bei den in dem dargestellten Ausführungsbeispiel erprobten Scannern liegen typische Abstände in der Größenordnung von 10-20cm.

Falls es vorgesehen ist, dass die Transportvorrichtungen 10 manuell an der Scan-Einrichtung vorbeigeführt werden, ist es erforderlich, Mittel zur Kontrolle der Parameter Geschwindigkeit und Abstand bereit zu stellen. In einem besonders bevorzugten Ausführungsbeispiel der Erfindung ist dazu als Abstandsmittel 80 ein länglicher Rammschutz vorgesehen, der sich vor der Scan-Einrichtung erstreckt. Der Rammschutz ist wie eine Stoßstange ausgebildet, wobei der äußere Rand dieser Anordnung in einem Abstand zu den Scannern angeordnet ist, welcher ein Erfassen der Barcodes ermöglicht. Ein Bediensteter ist nun angehalten, den Transportwagen 10 so an dem Rammschutz entlangzuziehen, dass er möglichst parallel am äußeren Rand entlang geführt werden kann. Dabei ist es vorteilhaft, wenn der Rammschutz am Anfang eine Abrundung in Richtung der Scan-Einrichtung aufweist, so dass der Transportwagen zuerst an die Abrundung und dann entlang des geraden Teils des Rammschutzes geführt werden kann. Dadurch kann vermieden werden, dass ein Transportwagen zu steil an den Rammschutz herangefahren wird und keine zur Scan-Einrichtung parallele Bahn eingehalten werden kann. Die Vorrichtung in Fig. 1 weist einen derartigen Rammschutz auf, für eine übersichlichere Darstellung ist die Transportvorrichtung 10 jedoch von dem Rammschutz entfernt dargestellt.

Die Einhaltung der erforderlichen Maximalgeschwindigkeit kann dabei durch Erfahrungswerte der Bediensteten gewährleistet werden. Vorzugsweise erzeugt die Scan-Einrichtung ein akustisches oder optisches Signal, falls die Geschwindigkeit überschritten wurde und der Transportwagen erneut an der Scan-Einrichtung vorbeigeführt werden muss.

In einem weiteren Ausführungsbeispiel der Erfindung, das in der Fig. 1 nicht dargestellt ist, sind als Abstandsmittel 80 zwei Führungsrillen im Boden vor der Scan-Einrichtung vorgesehen. Die Räder eines Transportwagens können in die Rillen eingeschoben werden, so dass der Wagen in einem bestimmten Abstand an der Scan-Einrichtung entlang gezogen werden kann. Die Maximalgeschwindigkeit kann auch hier durch die Erfahrung des Bediensteten kontrolliert werden. Ferner ist es möglich, den Transportwagen in ein Transportsystem einzuhängen, welches den Wagen in einem bestimmten Abstand und mit einer bestimmten Geschwindgkeit an der Scan-Einrichtung vorbeiführt.

Da sich die Erfindung nicht nur zur Überprüfung von Transportwagen, sondern von Transportvorrichtungen jeglicher Art eignet, können in alternativen Ausführungsbeispielen andere Abstandsmittel vorgesehen sein. Beispielsweise ist es möglich, die Transportvorrichtungen auf einer separaten Fördereinrichtung an der Scan-Einrichtung vorbeizuführen. Dies kann beispielsweise für beladene Paletten der Fall sein, welche auf ein kontinuierliches Förderband aufgebracht und an der erfindungsgemäßen Vorrichtung vorbeigeführt werden. In diesem Fall kann der Maximalabstand auf einfache Weise durch die Position des Förderbandes und die Geschwindigkeit durch den Vorschub des Förderbandes gesteuert werden. In einem weiteren Ausführungsbeispiel können Paletten von einem Gabelstapler an der Vorrichtung vorbeigefahren werden.

Den übereinander angeordneten Scannern 41 ist vorzugsweise jeweils eine Lichtschranke 42 zugeordnet. Die Lichtschranken befinden sich zweckmäßigerweise jeweils in der Nähe eines Scanners, wobei der Abstand den maximalen Abstand eines Barcodes zur oberen Kante eines Behälters nicht überschreiten sollte. So ist gewährleistet, dass eine erfasste Beladungshöhe direkt einem darunter liegenden Behälter zugeordnet werden kann.

Die Scan-Einrichtung 40 steht in Verbindung mit einer Auswerteeinheit 50, welche die von den Scannern 41, 44 und den Lichtschranken 42 erfassten Signale verarbeitet. Die Auswerteeinheit kann sich innerhalb des Gehäuses 43 oder getrennt von diesem befinden. Die Auswerteeinheit 50 weist übliche Rechenmittel wie einen Prozessor und Speicher auf. In der Auswerteeinheit ist eine Programmierung hinterlegt, welche die Verarbeitung der erfassten Signale zu der Information ermöglicht, ob eine Transporteinrichtung korrekt beladen wurde. Die Auswerteeinheit steht vorzugsweise in Verbindung mit einem Anzeigegerät 60 zur Anzeige des Ergebnisses der Überprüfung. Dabei handelt es sich beispielsweise um einen Monitor. Die Auswerteeinheit kann ferner in Verbindung mit einem Eingabemittel 61 stehen, bei dem es sich um eine Tastatur oder einen Touchscreen handeln kann.

Die Überprüfung der Beladung einer Transportvorrichtung 10 umfasst in einem besonders bevorzugten Ausführungsbeispiel der Erfindung neben der Prüfung, ob die Zielorte der erfassten Behälter mit dem Zielort der Transportvorrichtung übereinstimmen, auch eine Überprüfung, ob alle Behälter einen lesbaren Infoträger aufweisen. Zusätzlich kann geprüft werden, ob die maximale Beladungshöhe der Transportvorrichtung überschritten wurde.

Das erfindungsgemäße Verfahren sieht dazu als wesentlichen Schritt die Erfassung des Zielortes der Transportvorrichtung vor. Diese Erfassung kann auf verschieden Arten erfolgen. Sollen beispielsweise mehrere Transportvorrichtungen mit dem gleichen Transportziel überprüft werden, kann das gemeinsame Ziel fest in der Auswerteeinheit hinterlegt werden, was beispielsweise durch eine manuelle Eingabe erfolgen kann. Auch sich änderende Transportziele können jeweils manuell vor jeder Prüfung eingegeben werden. Es hat sich jedoch als zweckmäßig erwiesen, auch zur Erfassung des Transportzieles ein Identifikationsmittel in Form eines Barcodes zu verwenden. Das dazu verwendete Identifikationsmittel 11 ist vorzugsweise an der Transportvorrichtung angebracht und kann automatisch über einen separaten Scanner 44 auf dieser Höhe oder manuell über einen Handheld-Scanner eingelesen werden.

Erfindungsgemäß wird ein Transportwagen 10 mit den Behältern 20 unter Berücksichtigung der genannten Parameter des Abstands und der Geschwindigkeit an der Scan-Einrichtung 40 vorbeigefahren und die Scanner 41 und die Lichtschranken 42 erfassen den Beladungszustand des Wagens. Dabei ist ein Wagen so beladen, dass alle Identifikationsmittel zur gleichen Seite ausgerichtet sind. Um größere Transportvorrichtungen überprüfen zu können, auf welchen Behälter mit Identifikationsmitteln abgestellt sind, die zu beiden Seiten ausgerichtet sind, könnte eine zweite Scan-Einrichtung vorgesehen werden, so dass der Transportwagen durch ein Tor geführt wird. Die durch die Scan-Einrichtung erfassten Signale werden der Auswerteeinheit 50 übermittelt und in dieser verarbeitet. Zur Verarbeitung der Daten benötigt die Auswerteeinheit als wesentliche Grundlage Informationen über die jeweilige Größe eines Behälters.

Für den Fall, dass mit dem Verfahren nur Behälter der gleichen Größe geprüft werden, ist die Größe zweckmäßigerweise in der Auswerteeinheit gespeichert. In einem besonders bevorzugten Ausführungsbeispiel der Erfindung ist die Vorrichtung jedoch so ausgebildet, dass sie Behälter unterschiedlicher Größen prüfen kann. In diesem Fall ist die Größe der Behälter 20 in dem jeweiligen Identifikationsmittel 30 hinterlegt. Dies kann beispielsweise indirekt über eine Angabe zur Art eines Behälters erfolgen, wobei in der Auswerteeinheit die mit einer Behälterart korrespondierende Größe gespeichert ist. Insbesondere müssen in der Auswerteinheit die Abmessungen der Behälterseitenflächen vorliegen, an denen die Identifikationsmittel angebracht sind.

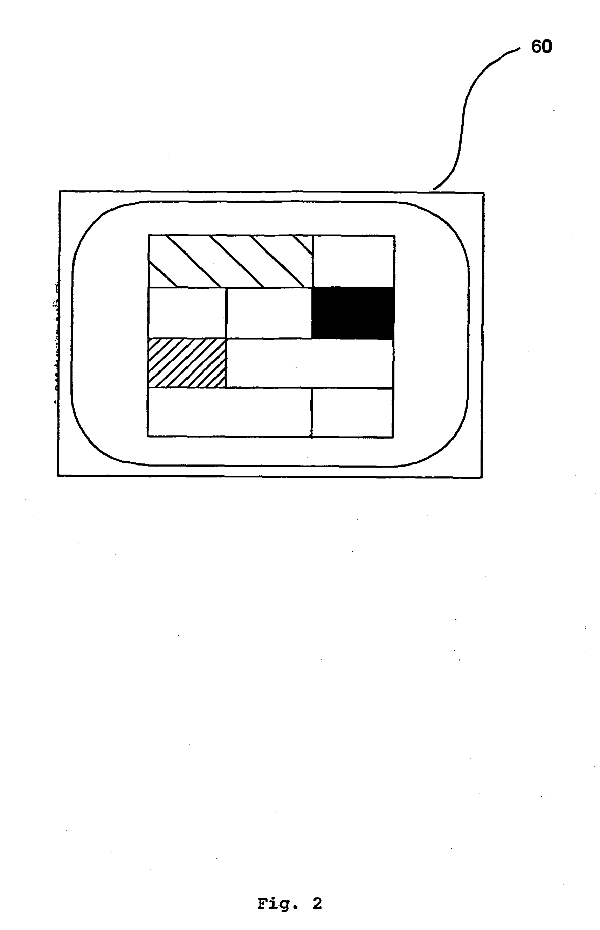

Ein erster Schritt bei der Auswertung der erfassten Signale besteht darin, die erfassten Zielorte der Behälter mit dem Zielort der Transportvorrichtung zu vergleichen- Stimmt ein Zielort nicht mit dem Zielort der Transportvorrichtung überein, erzeugt die Auswerteeinheit ein erstes Signal A. das Signal wird vorzugsweise in ein von einem Nutzer wahrnehmbares Signal umgesetzt. Dabei handelt es sich beispielsweise um ein akustisches und/oder ein optisches Signal. Zusätzlich zu dem Signal, dass ein Behälter mit einem falschen Zielort geladen wurde, ist für den Nutzer die Information zweckmäßig, um welchen Behälter es sich handelt. Dies kann von der Auswerteeinheit aufgrund der Reihenfolge der Signale und der Höhe des zugehörigen Scanners ermittelt werden. Dazu ist in einem bevorzugten Ausführungsbeispiel der Erfindung vorgesehen, den Behälter mit dem falschen Zielort auf einem Monitor 60 anzuzeigen. Die Anzeige des Behälters kann so erfolgen, dass auf dem Monitor ein Abbild des Transportwagens mit allen Behältern erzeugt wird und der falsche Behälter optisch markiert wird. Beispielsweise kann der Behälter rot hinterlegt werden und ein Bediensteter kann den falschen Behälter prüfen und entfernen. Ein Beispiel für die Darstellung des Überprüfungsergebnisses ist in Fig. 2 dargestellt.

Das Verfahren sieht ferner die Überprüfung vor, ob alle Behälter mit lesbaren Identifikationsmitteln versehen sind. Für diese Überprüfung errechnet die Auswerteeinheit insbesondere bei der Verwendung von Behältern mit unterschiedlicher Größe den Bereich, den die Seitenwand eines betreffenden Behälters in der Seitenansicht der Transportvorrichtung einnimmt. Falls in dem errechneten Bereich kein weiterer Barcode detektiert wird, wird dies von der Auswerteeinheit als korrekt verwertet. Ergibt die Berechnung darüber hinaus jedoch Bereiche, welche keinem erfassten Identifikationsmittel zuzuordnen sind, in welchem die Lichtschranken jedoch einen Gegenstand detektiert haben, bewertet die Auswerteeinheit dies als einen Fall, bei dem ein Behälter entweder keinen oder einen nicht-lesbaren Barcode aufweist. Dabei wird insbesondere die durch die Lichtschranken detektierte Beladungshöhe der Transportvorrichtung verarbeitet, da aus dieser geschlossen werden kann, dass sich unterhalb der Beladungshöhe Behälter befinden müssen. Auch ungleiche Beladungshöhen beispielsweise aufgrund von mehreren nebeneinander angeordneten Behälterstapeln mit unterschiedlichen Höhen können durch die Lichtschranken erfasst und aufgrund der Reihenfolge und der Position der Signale von der Auswerteeinheit verarbeitet werden. Wird beispielsweise im oberen Randbereich des Stapels ein Behälter detektiert, jedoch kein zugehöriger Barcode erfasst, bedeutet dies, dass oben auf dem Stapel wenigstens ein Behälter ohne lesbaren Barcode steht.

Auch für den Fall eines nicht detektierten Barcode erzeugt die Auswerteeinheit ein zweites Signal B, das dem Nutzer vorzugsweise wahrnehmbar angezeigt wird. Der so ermittelte Bereich der Seitenansicht der Transportvorrichtung wird als Behälter mit fehlendem Infoträger auf dem Monitor beispielsweise blau angezeigt. Ein Bediensteter kann nun den Behälter prüfen und feststellen, ob kein Infoträger vorhanden ist oder der Barcode lediglich nicht-lesbar war.

In einem weiteren Ausführungsbeispiel des Verfahrens kann ferner überprüft werden, ob eine maximal erlaubte Beladungshöhe überschritten wird. Dies ist durch die Auswertung des Signals einer oberen Lichtschranke möglich, welche oberhalb der maximalen Beladungshöhe positioniert ist. Wird in diesem Bereich ein Behälter detektiert, kann dies ebenfalls farblich auf dem Monitor angezeigt werden.

Es hat sich als zweckmäßig erwiesen, die Scan-Einrichtung bei einem Fehlersignal der Auswerteeinheit für den weiteren Betrieb zu sperren. Für die weitere Nutzung der Vorrichtung muss die Einrichtung durch einen Nutzer entsperrt werden. Die Entsperrung kann im einfachsten Fall durch eine manuelle Eingabe durch den Nutzer an einem Eingabemittel 61 wie einer Tastatur oder einem Touchscreen erfolgen. Der Nutzer muss so wenigstens auf die Fehlermeldung reagieren und eine vorgegebene Taste drücken oder ein Passwort eingeben. Das Passwort kann auch durch einen Dritten eingegeben werden, welcher die Entsperrung somit autorisiert.

In einem weiteren besonders bevorzugten Ausführungsbeispiel erfolgt die Entsperrung der Scan-Einrichtung erst, wenn die als fehlerhaft detektierte Transportvorrichtung erneut an den Scannern vorbeigeführt und als korrigiert erkannt wird. Dazu weist die Transportvorrichtung beispielsweise ein Identifikationsmittel auf, das neben dem Zielort eine eindeutige ID aufweist. Die ID kann manuell oder automatisch nochmals erfasst und mit der zuletzt erfassten ID verglichen werden. Stimmen die Identifikationen überein und wird daraufhin von den Scannern und den Lichtschranken eine Transportvorrichtung mit Behältern erfasst, wertet die Auswerteeinheit die Signale aus und gibt im optimalen Fall keine Fehlermeldung aus, da die Transportvorrichtung nun richtig beladen sein sollte. Stimmen die Identifikationen nicht überein oder folgt keine Erfassung einer Transportvorrichtung, gibt die Auswerteeinheit kein Ergebnis aus und die Vorrichtung bleibt somit für den weiteren Betrieb gesperrt.

Vorzugsweise werden alle Vorgänge und insbesondere die Erzeugung von Fehlersignalen durch die Auswerteeinheit protokolliert. In einem weiteren besonders bevorzugten Ausführungsbeispiel der Erfindung werden die durch die Scan-Einrichtung erfassten Daten über Fehlermeldungen, die Zielorte und/oder Identifikationen der Behälter einem zentralen Verwaltungssystem 70 übermittelt. Die Daten können im Verwaltungssystem beispielsweise im Hinblick auf die Erfassung von Sendungsmengen, statistische Untersuchungen oder die Inventarisierung von Behältern und Transportwagen verarbeitet werden. Insbesondere ist es im postalischen Bereich möglich, einem Zielort die Information zu übermitteln, wieviele und welche Art von Sandungsbehälter zu dem Zielort transportiert werden.

### Bezugszeichenliste:

- 10: Transportvorrichtung, Transportwagen
- 20: Gegenstand, Behälter
- 30: Identifikationsmittel
- 40: Scan-Einrichtung
- 41: Scanner, mehrere
- 42: Lichtschranke, mehrere
- 43: Gehäuse
- 44: Separater Scanner, fest/mobil
- 50: Auswerteeinheit
- 60: Anzeigegerät
- 61: Eingabemittel, Touchscreen, Tastatur
- 70: Zentrales Verwaltungssystem
- 80: Abstandsmittel, Rammschutz

## Patentansprüche

1. Verfahren zur Überprüfung der Beladung einer Transportvorrichtung (10), wobei die Transportvorrichtung mit einem oder mehreren Gegenständen (20) beladen ist und die Gegenstände mit einem optisch erfassbaren Identifikationsmittel (30) versehen sind, wobei in einem Identifikationsmittel (30) wenigstens Informationen über den Zielort des jeweiligen Gegenstands (20) hinterlegt sind,
**gekennzeichnet durch** folgende Merkmale:
- Erfassen des Zielortes der Transportvorrichtung (10);
- Vorbeiführen der Transportvorrichtung (10) zusammen mit den Gegenständen (20) an einer Scan-Einrichtung (40), wobei die Scan-Einrichtung (40) die Identifikationsmittel (30) mit wenigstens zwei übereinander angeordneten Scannern (41) erfasst;
- Erfassen der Beladungshöhe der Gegenstände (20) beim Vorbeifahren der Transportvorrichtung (10) mit den Gegenständen (20) an der Scan-Einrichtung (40), wobei die Scan-Einrichtung (40) die Gegenstände (20) mit wenigstens zwei übereinander angeordneten Lichtschranken (41) abtastet;
- Übermittlung der erfassten Informationen der Identifikationsmittel (30) und Informationen über die Beladungshöhe zu einer Auswerteeinheit (50);
- Auswertung der erfassten Identifikationsmittel (30) in der Auswerteeinheit (50), wobei der in einem Identifikationsmittel (30) enthaltene Zielort ermittelt wird;
- Vergleich des jeweiligen erfassten Zielortes eines Gegenstands (20) mit dem Zielort der Transportvorrichtung (10);
- Vergleich der ermittelten Beladungshöhe mit in der Auswerteeinheit (50) vorliegenden Informationen über die Größen der zu den erfassten Identifikationsmitteln (30) gehörenden Gegenstände (20);
- Ausgabe eines ersten Signals A **durch** die Auswerteeinheit (50), falls ein über ein Identifikationsmittel (30) erfasster Zielort eines Gegenstands (20) nicht mit dem Zielort der Transportvorrichtung (10) übereinstimmt; und
- Ausgabe eines zweiten Signals B **durch** die Auswerteeinheit (40) für den Fall, dass eine Plausibilitätsüberprüfung ergibt, dass in einem Bereich der Transportvorrichtung (10) ein Gegenstand (20) positioniert ist, welcher kein oder ein nicht-lesbares Identifikationsmittel (30) aufweist.

2. Verfahren nach Anspruch 1, **dadurch gekennzeichnet, dass** das erste Signal A der Auswerteeinheit (50) in eine von einem Nutzer wahrnehmbare Information umgesetzt wird, dass ein Identifikationsmittel (30) eines Gegenstands (20) einen Zielort enthält, der nicht dem Zielort der Transportvorrichtung (10) entspricht und/oder dass das zweite Signal B der Auswerteeinheit (50) in eine von einem Nutzer wahrnehmbare Information umgesetzt wird, dass in einem Bereich der Transportvorrichtung (10) ein Gegenstand (20) positioniert ist, welcher kein oder ein nicht-lesbares Identifikationsmittel (30) aufweist.

3. Verfahren nach Anspruch 2, **dadurch gekennzeichnet, dass** es sich bei der von einem Nutzer wahrnehmbaren Information um ein akustisches Signal und/oder eine visuelle Anzeige auf einem Anzeigegerät (60) handelt.

4. Verfahren nach einem oder mehreren der Ansprüche 1 bis 3, **dadurch gekennzeichnet, dass** die Auswerteeinheit (50) eine Information erzeugt, welcher Gegenstand (20) ein Identifikationsmittel (30) aufweist, das einen Zielort enthält, der nicht dem Zielort der Transportvorrichtung (10) entspricht und/oder dass die Auswerteeinheit (50) eine Information erzeugt, in welchem Bereich der Transportvorrichtung (10) sich ein Gegenstand (20) mit keinem oder einem nicht-lesbaren Identifikationsmittel (30) befindet.

5. Verfahren nach Anspruch 4, **dadurch gekennzeichnet, dass** die Information, welcher Gegenstand (20) ein Identifikationsmittel (30) aufweist, das einen Zielort enthält, der nicht dem Zielort der Transportvorrichtung (10) entspricht, und/oder die Information, in welchem Bereich der Transportvorrichtung (10) sich ein Gegenstand (20) mit keinem oder einem nicht-lesbaren Identifikationsmittel (30) befindet, visuell auf einem Anzeigegerät (60) angezeigt wird.

6. Verfahren nach einem oder mehreren der Ansprüche 1 bis 5, **dadurch gekennzeichnet, dass** der Transportvorrichtung (10) ein Identifikationsmittel (11) zugeordnet ist, in welchem der Zielort der Transportvorrichtung (10) hinterlegt ist und dass das Identifikationsmittel (11) vor oder nach dem Vorbeiführen an der Scan-Einrichtung (40) durch ein mobiles Scangerät erfasst wird.

7. Verfahren nach einem oder mehreren der Ansprüche 1 bis 5, **dadurch gekennzeichnet, dass** die Transportvorrichtung (10) mit einem Identifikationsmittel (11) versehen ist, in welchem der Zielort der Transportvorrichtung (10) hinterlegt ist und dass das Identifikationsmittel (11) beim Vorbeiführen an der Scan-Einrichtung (40) durch einen separaten Scanner (44) der Scan-Einrichtung (40) erfasst wird.

8. Verfahren nach einem oder mehreren der Ansprüche 1 bis 5, **dadurch gekennzeichnet, dass** der Zielort der Transportvorrichtung (10) vor oder nach jedem Vorbeiführen der Transportvorrichtung (10) an der Scan-Einrichtung (40) manuell durch einen Nutzer eingegeben wird.

9. Verfahren nach einem oder mehreren der Ansprüche 1 bis 5, **dadurch gekennzeichnet, dass** der Zielort der Transportvorrichtung (10) fest in der Auswerteeinheit (50) gespeichert ist.

10. Verfahren nach einem oder mehreren der Ansprüche 1 bis 9, **dadurch gekennzeichnet, dass** die Gegenstände (20) von unterschiedlicher Größe sein können, die Identifikationsmittel (30) Informationen über die Größe der jeweiligen Gegenstände (20) enthalten und die durch die Scan-Einrichtung (40) erfassten Informationen über die Größe an die Auswerteeinheit (50) übermittelt und in dieser verarbeitet werden.

11. Verfahren nach einem oder mehreren der Ansprüche 1 bis 9, **dadurch gekennzeichnet, dass** alle Gegenstände (20) von gleicher Größe sind und die Größe in die Auswerteeinheit (50) eingegeben und in dieser gespeichert ist.

12. Verfahren nach einem oder mehreren der Ansprüche 1 bis 11, **dadurch gekennzeichnet, dass** die Scan-Einrichtung (40) nach der Erzeugung eines Signals durch die Auswerteeinheit (50), dass ein über ein Identifikationsmittel (30) erfasster Zielort eines Gegenstands (20) nicht mit dem Zielort der Transportvorrichtung (10) übereinstimmt und/oder dass in einem Bereich der Transportvorrichtung (10) ein Gegenstand (20) positioniert ist, welcher kein oder ein nicht-lesbares Identifikationsmittel (30) aufweist, für den weiteren Betrieb gesperrt wird.

13. . Verfahren nach Anspruch 12, **dadurch gekennzeichnet, dass** die Entsperrung der Scan-Einrichtung (40) eine manuelle Eingabe eines Nutzers erfordert.

14. Verfahren nach Anspruch 12, **dadurch gekennzeichnet, dass** die Entsperrung der Scan-Einrichtung (40) das erneute Vorbeiführen der als fehlerhaft beladenen erkannten Transportvorrichtung (19) an der Scan-Einrichtung (40) erfordert.

15. Verfahren nach einem oder mehreren der Ansprüche 1 bis 14, **dadurch gekennzeichnet, dass** die Auswerteeinheit (50) ein Protokoll über die Signale A und B erstellt.

16. Verfahren nach einem oder mehreren der Ansprüche 1 bis 15, **dadurch gekennzeichnet, dass** die von der Scan-Einrichtung (40) erfassten Informationen über die Zielorte der Gegenstände (20) bzw. der Transportvorrichtung (10) einem zentralen Verwaltungssystem (70) übermittelt werden.

17. Verfahren nach einem oder mehreren der Ansprüche 1 bis 16, **dadurch gekennzeichnet, dass** es sich bei den Gegenständen (20) um im Wesentlichen quaderförmige Behälter handelt.

18. Verfahren nach Anspruch 17, **dadurch gekennzeichnet, dass** es sich bei den Gegenständen (20) um Behälter handelt, in welche Postsendungen mit jeweils dem gleichen Transportziel eingebracht sind.

19. Verfahren nach einem oder mehreren der Ansprüche 1 bis 18, **dadurch gekennzeichnet, dass** es sich bei der Transportvorrichtung (10) um einen Transportwagen handelt.

20. Vorrichtung zur Überprüfung der Beladung einer Transportvorrichtung (10), wobei die Transportvorrichtung mit einem oder mehreren Gegenständen (20) beladen ist und die Gegenstände mit einem optisch erfassbaren Identifikationsmittel (30) versehen sind, **dadurch gekennzeichnet, dass** es sich bei der Vorrichtung um eine Scan-Einrichtung (40) mit folgenden Merkmalen handelt:
- Gehäuse (43) mit mehreren übereinander angeordneten Scannern (41);
- Mittel zum Erfassen des Zielortes einer Transportvorrichtung (10), wobei das Mittel in Verbindung mit der Auswerteeinheit (50) steht;
- Auswerteeinheit (50) zur Auswertung der von den Scannern (41) erfassten Signale, wobei die Auswerteeinheit Rechenmittel zum Vergleich der erfassten Zielorte der Gegenstände (20) mit dem Zielort der Transportvorrichtung (10) umfasst; und
- Alarmmittel zum Erzeugen eines ersten Signals A für den Fall, dass der Vergleich ergeben hat, dass ein erfasster Zielort eines Gegenstands (20) nicht mit dem Zielort der Transportvorrichtung übereinstimmt; und
- mehrere übereinander angeordnete Lichtschranken (42), wobei die Anzahl der Lichtschranken wenigstens der Anzahl der Scanner (41) entspricht;
- Mittel zur Erfassung der Größe eines Gegenstands (20);
- Auswerteeinheit (50) mit Rechenmitteln zum Vergleich einer mit den Lichtschranken detektierten Beladungshöhe der Gegenstände (20) mit der Größe der erfassten Gegenstände (20);
- Alarmmittel zum Erzeugen eines zweiten Signals B für den Fall, dass der Vergleich ergeben hat, dass ein detektierter Gegenstand kein oder ein nicht-lesbares Identifikationsmittel (30) aufweist.

21. Vorrichtung nach Anspruch 20, **dadurch gekennzeichnet, dass** die Scan-Einrichtung (40) in Verbindung mit einem Anzeigerät (60) steht und die Auswerteeinheit (50) Rechenmittel zur Ermittlung und Darstellung eines Gegenstands (20) auf dem Anzeigegerät (60)aufweist, dessen Zielort nicht dem Zielort der Transportvorrichtung (10) entspricht und/oder der kein oder kein lesbares Identifikationsmittel (30) aufweist.

22. Vorrichtung nach einem oder beiden der Ansprüche 20 und 21, **dadurch gekennzeichnet, dass** die Scan-Einrichtung (40) Abstandsmittel (80) zum Vorbeiführen der Transportvorrichtung (10) in einem vorgegebenen Abstand zum Gehäuse (43) aufweist.

23. Vorrichtung nach Anspruch 22, **dadurch gekennzeichnet, dass** es sich bei den Abstandsmitteln (80) um einen länglichen Rammschutz in einem Abstand zu dem Gehäuse (43) handelt, an welchem die Transportvorrichtung (10) bei der Durchführung des Verfahrens manuell entlang gezogen wird.

24. Vorrichtung nach Anspruch 22, **dadurch gekennzeichnet, dass** es sich bei den Abstandsmitteln (80) um zwei Führungsrillen in einem Abstand zu dem Gehäuse (43) handelt, durch welche Räder der Transporteinrichtung (10) bei der Durchführung des Verfahrens manuell gezogen werden.

25. Vorrichtung nach einem oder mehreren der Ansprüche 20 bis 24, **dadurch gekennzeichnet, dass** es sich bei dem Mitteln zum Erfassen des Zielortes einer Transportvorrichtung (10) um einen separaten Scanner (44) handelt, der sich am Gehäuse (43) oder als mobiles Bauteil losgelöst von dem Gehäuse (43) befindet.

## Claims

1. Method for checking the loading of a transport device (10), whereby the transport device is loaded with one or more objects (20) and the objects are provided with an optically detectable identification means (30), whereby at least information about the destination of the object (20) in question is stored in the identification means (30),
**characterized by** the following features:
• detection of the destination of the transport device (10);
• moving of the transport device (10), together with the objects (20), past a scanning device (40), whereby the scanning device (40) detects the identification means (30) with at least two scanners (41) arranged one above the other;
• detection of the loading height of the objects (20) when the transport device (10) with the objects (20) is moved past the scanning device (40), whereby the scanning device (40) scans the objects (20) with at least two scanners (41) arranged one above the other;
• transmission of the detected information of the identification means (30) and of the information about the loading height to an evaluation unit (50);
• evaluation of the detected identification means (30) in the evaluation unit (50), whereby the destination contained in the identification means (30) is ascertained;
• comparison of the detected destination of each object (20) with the destination of the transport device (10);
• comparison of the detected loading height to information present in the evaluation unit (50) about the sizes of the objects (20) belonging to the detected identification means (30);
• generation of a first signal A by the evaluation unit (50) if the destination of an object (20) detected with an identification means (30) does not match the destination of the transport device (10); and
• generation of second signal B by the evaluation unit (50) in case a plausibility check reveals that an object (20) with an unreadable identification means (30) or with no identification means (30) at all is positioned in an area of the transport device (10).

2. The method according to Claim 1,
**characterized in that,**
the first signal A of the evaluation unit (50) is converted into information that can be perceived by a user, indicating that an identification means (30) of an object (20) contains a destination that does not match the destination of the transport device (10) and/or **in that** the second signal B of the evaluation unit (50) is converted into information that can be perceived by a user, indicating that an object with an unreadable identification means or with no identification means at all is positioned in an area of the transport device (10).

3. The method according to Claim 2,
**characterized in that**
the information that can be perceived by a user is an acoustic signal and/or a visual display on a display device (60).

4. The method according to one or more of Claims 1 to 3,
**characterized in that**
the evaluation unit (50) generates information indicating which object (20) has an identification means (30) containing a destination that does not match the destination of the transport device (10) and/or **in that** the evaluation unit (50) generates information indicating in which area of the transport device (10) an object (20) is positioned with an unreadable identification means (30) or with no identification means (30) at all.

5. The method according to Claim 4,
**characterized in that**
the information as to which object (20) has an identification means (30) containing a destination that does not match the destination of the transport device (10) and/or the information indicating in which area of the transport device (10) an object is present with an unreadable identification means (30) or with no identification means (30) at all is displayed visually on a display device (60).

6. The method according to one or more of Claims 1 to 5,
**characterized in that**
the transport device (10) is associated with an identification means (11) in which the destination of the transport device (10) is stored, and **in that** the identification means (11) is detected by a portable scanner before or after being moved past the scanning device (40).

7. The method according to one or more of Claims 1 to 5,
**characterized in that**
the transport device (10) is provided with an identification means (11) in which the destination of the transport device (10) is stored, and **in that** the identification means (11) is detected by a separate scanner (44) of the scanning device (40) while being moved past said scanning device (40).

8. The method according to one or more of Claims 1 to 5,
**characterized in that**
the destination of the transport device (10) is entered manually by a user before or after each time the transport device (10) is moved past the scanning device (40).

9. The method according to one or more of Claims 1 to 5,
**characterized in that**
the destination of the transport device (10) is permanently stored in the evaluation unit (50).

10. The method according to one or more of Claims 1 to 9,
**characterized in that**
the objects (20) can be of different sizes, the identification means (30) contain information about size of the individual objects (20) and the information about the size detected by the scanning device (40) is transmitted to the evaluation unit (50) and processed there.

11. The method according to one or more of Claims 1 to 9,
**characterized in that**
all of the objects (20) are of the same size and the size is entered into the evaluation unit (50) and stored there.

12. The method according to one or more of Claims 1 to 11,
**characterized in that**
the scanning device (40) is blocked for further operation once a signal has been generated by the evaluation unit (50) indicating that a destination of an object (20) detected by an identification means (30) does not match the destination of the transport device (10) and/or indicating that an object (20) with an unreadable identification means (30) or with no identification means (30) at all is positioned in an area of the transport device (10).

13. The method according to Claim 12,
**characterized in that**
the unblocking of the scanning device (40) requires a manual input by a user.

14. The method according to Claim 12,
**characterized in that**
the unblocking of the scanning device (40) requires that the transport device (10) that has been identified as being incorrectly loaded has to be moved past the scanning device (40) once again.

15. The method according to one or more of Claims 1 to 14,
**characterized in that**
the evaluation unit (50) generates a log about the signals A and B.

16. The method according to one or more of Claims 1 to 15,
**characterized in that** the information acquired by the scanning device (40) about the destinations of the objects (20) or of the transport device (10) is transmitted to a central administration system (70).

17. The method according to one or more of Claims 1 to 16,
**characterized in that**
the objects (20) are essentially cuboidal containers.

18. The method according to Claim 17,
**characterized in that**
the objects (20) are containers holding mailpieces that all have the same transport destination.

19. The method according to one or more of Claims 1 to 18,
**characterized in that**
the transport device (10) is a transport cart.

20. Device for checking the loading of a transport device (10), whereby the transport device is loaded with one or more objects (20) and the objects are provided with an optically detectable identification means (30),
**characterized in that**
the device is a scanning device (40) having the following features:
• a housing (43) with several scanners (41) arranged one above the other;
• a means for detecting the destination of a transport device (10), whereby the means is connected to the evaluation unit (50);
• an evaluation unit (50) for evaluating the signals detected by the scanners (41), whereby the evaluation unit comprises computing means for comparing the detected destinations of the objects (20) to the destination of the transport device (10); and
• an alarm means to generate a first signal A in case the comparison has revealed that a detected destination of an object (20) does not match the destination of the transport device (10); and
• several light barriers (42) arranged one above the other, whereby the number of light barriers at least matches the number of scanners (41);
• a means for detecting the size of an object (20);
• an evaluation unit (50) with computing means for comparing a loading height of the objects (20) detected with the light barriers to the size of the detected objects (20);
• an alarm means for generating a second signal B in case the comparison has revealed that a detected object has an unreadable identification means (30) or no identification means (30) at all.

21. The device according to Claim 20,
**characterized in that**
the scanning device (40) is connected to a display device (60) and the evaluation unit (50) comprises computing means for ascertaining and displaying on the display device (60) an object (20) whose destination does not match the destination of the transport device (10) and/or that has an unreadable identification means (30) or no identification means (30) at all.

22. The device according to one or both of Claims 20 and 21,
**characterized in that**
the scanning device (40) has spacers (80) for moving the transport device (10) past, at a certain distance from the housing (43) of the device.

23. The device according to Claim 22,
**characterized in that**
the spacers (80) are an elongated collision guard that is arranged at a distance from the housing (43) and along which the transport device (10) is pulled manually when the method is being carried out.

24. The device according to Claim 22,
**characterized in that**
the spacers (80) are two guide grooves arranged at a distance from the housing (43), and the wheels of the transport device (10) are manually pulled through said grooves when the method is being carried out.

25. The device according to one or more of Claims 20 to 24,
**characterized in that**
the means for detecting the destination of a transport device (10) is a separate scanner (44) that is located on the housing (43) or that is configured as a portable component separate from the housing (43).

## Revendications

1. Procédé pour vérifier le chargement d'un dispositif de transport (10), le dispositif de transport étant chargé d'un ou de plusieurs objets (20) et les objets étant pourvus d'un moyen d'identification (30) détectable optiquement, au moins des informations sur la destination de l'objet respectif (20) étant déposées dans un moyen d'identification (30), **caractérisé par** les caractéristiques suivantes:
- détection de la destination du dispositif de transport (10);
- passage du dispositif de transport (10) avec les objets (20) à hauteur d'un dispositif de scannage (40), le dispositif de scannage (40) détectant les moyens d'identification (30) avec au moins deux scanners (41) superposés;
- détection de la hauteur de chargement des objets (20) lors du passage du dispositif de transport (10) avec les objets (20) à hauteur du dispositif de scannage (40), le dispositif de scannage (40) balayant les objets (20) au moyen d'au moins deux barrières lumineuses (41) superposées;
- transfert des informations des moyens d'identification (30) et des informations sur la hauteur de chargement, qui ont été détectées, vers une unité d'évaluation (50);
- évaluation des moyens d'identification détectés (30) dans l'unité d'évaluation, avec détermination de la destination contenue dans un moyen d'identification (30);
- comparaison de la destination respective d'un objet (20) qui a été détectée avec la destination du dispositif de transport (10);
- comparaison de la hauteur de chargement qui a été déterminée avec des informations sur les tailles des objets (20) associés aux moyens d'identification détectés (30), lesquelles informations se trouvent dans l'unité d'évaluation (50);
- production en sortie d'un premier signal A par l'unité d'évaluation (50) lorsqu'une destination d'un objet (20) détectée par l'intermédiaire d'un moyen d'identification (30) ne coïncide pas avec la destination du dispositif de transport (10) et
- production en sortie d'un deuxième signal B par l'unité d'évaluation (40) lorsqu'il ressort d'un contrôle de plausibilité que, dans une zone du dispositif de transport (10), un objet (20) est positionné, lequel ne comporte aucun moyen d'identification (30) ou comporte un moyen d'identification (30) non lisible.

2. Procédé selon la revendication 1, **caractérisé en ce que** le premier signal A de l'unité d'évaluation (50) est converti en une information perceptible par un utilisateur et indiquant qu'un moyen d'identification (30) d'un objet (20) contient une destination qui ne correspond pas à la destination du dispositif de transport (10) et/ou **en ce que** le deuxième signal B de l'unité d'évaluation (50) est converti en une information perceptible par un utilisateur et indiquant qu'est positionné, dans une zone du dispositif de transport (10), un objet (20) qui ne comporte aucun moyen d'identification (30) ou qui comporte un moyen d'identification (30) non lisible.

3. Procédé selon la revendication 2, **caractérisé en ce que** l'information perceptible par un utilisateur est un signal acoustique et/ou un affichage visuel sur un dispositif d'affichage (60).

4. Procédé selon l'une ou plusieurs des revendications 1 à 3, **caractérisé en ce que** l'unité d'évaluation (50) génère une information indiquant quel objet (20) comporte un moyen d'identification (30) qui contient une destination qui ne correspond pas à la destination du dispositif de transport (10) et/ou **en ce que** l'unité d'évaluation (50) génère une information indiquant dans quelle zone du dispositif de transport (10) se trouve un objet (20) qui ne comporte aucun moyen d'identification (30) ou qui comporte un moyen d'identification (30) non lisible.

5. Procédé selon la revendication 4, **caractérisé en ce que** l'information indiquant quel objet (20) comporte un moyen d'identification (30) qui contient une destination qui ne correspond pas à la destination du dispositif de transport (10) et/ou l'information indiquant dans quelle zone du dispositif de transport (10) se trouve un objet (20) qui ne comporte aucun moyen d'identification (30) ou qui comporte un moyen d'identification (30) non lisible sont affichées visuellement sur un appareil d'affichage (60).

6. Procédé selon l'une ou plusieurs des revendications 1 à 5, **caractérisé en ce qu'**est associé, au dispositif de transport (10), un moyen d'identification (11) dans lequel la destination du dispositif de transport (10) est déposée et **en ce que** le moyen d'identification (11) est détecté par un appareil de scannage mobile avant ou après le passage à hauteur du dispositif de scannage (40).

7. Procédé selon l'une ou plusieurs des revendications 1 à 5, **caractérisé en ce que** le dispositif de transport (10) est pourvu d'un moyen d'identification (11) dans lequel la destination du dispositif de transport (10) est déposée et **en ce que** le moyen d'identification (11) est détecté par un scanner séparé (44) du dispositif de scannage (40) au passage à hauteur du dispositif de scannage (40).

8. Procédé selon l'une ou plusieurs des revendications 1 à 5, **caractérisé en ce que** la destination du dispositif de transport (10) est introduite manuellement par un utilisateur avant ou après chaque passage du dispositif de transport (10) à hauteur du dispositif de scannage (40).

9. Procédé selon l'une ou plusieurs des revendications 1 à 5, **caractérisé en ce que** la destination du dispositif de transport (10) est stockée dans l'unité d'évaluation (50).

10. Procédé selon l'une ou plusieurs des revendications 1 à 9, **caractérisé en ce que** les objets (20) peuvent être de taille différente, les moyens d'identification (30) contiennent des informations sur la taille des objets respectifs (20) et les informations sur la taille détectées par le dispositif de scannage (40) sont transférées à l'unité d'évaluation (50) et y sont traitées.

11. Procédé selon l'une ou plusieurs des revendications 1 à 9, **caractérisé en ce que** tous les objets (20) sont de même taille et la taille est introduite dans l'unité d'évaluation (50) et y est stockée.

12. Procédé selon l'une ou plusieurs des revendications 1 à 11, **caractérisé en ce que** le fonctionnement du dispositif de scannage (40) est bloqué après la production, par l'unité d'évaluation (50), d'un signal indiquant qu'une destination d'un objet (20) détectée par l'intermédiaire d'un moyen d'identification (30) ne coïncide pas avec la destination du dispositif de transport (10) et/ou qu'est positionné, dans une zone du dispositif de transport (10), un objet (20) qui ne comporte aucun moyen d'identification (30) ou qui comporte un moyen d'identification (30) non lisible.

13. Procédé selon la revendication 12, **caractérisé en ce que** le déblocage du dispositif de scannage (40) nécessite une entrée manuelle d'un utilisateur.

14. Procédé selon la revendication 12, **caractérisé en ce que** le déblocage du dispositif de scannage (40) nécessite le nouveau passage, à hauteur du dispositif de scannage (40), du dispositif de transport (10) reconnu comme étant mal chargé.

15. Procédé selon l'une ou plusieurs des revendications 1 à 14, **caractérisé en ce que** l'unité d'évaluation (50) établit un protocole relatif aux signaux A et B.

16. Procédé selon l'une ou plusieurs des revendications 1 à 15, **caractérisé en ce que** les informations détectées par le dispositif de scannage (40) concernant les destinations des objets (20) respectivement du dispositif de transport (10) sont transférées à un système de gestion central (70).

17. Procédé selon l'une ou plusieurs des revendications 1 à 16, **caractérisé en ce que** les objets (20) sont des contenants qui ont sensiblement la forme de parallélépipèdes rectangles.

18. Procédé selon la revendication 17, **caractérisé en ce que** les objets (20) sont des contenants dans lesquels sont introduits des envois postaux qui ont respectivement la même destination de transport.

19. Procédé selon l'une ou plusieurs des revendications 1 à 18, **caractérisé en ce que** le dispositif de transport (10) est un chariot de transport.

20. Dispositif pour contrôler le chargement d'un dispositif de transport (10), le dispositif de transport étant chargé d'un ou de plusieurs objets (20) et les objets étant pourvus d'un moyen d'identification (30) détectable optiquement, **caractérisé en ce que** le dispositif est un dispositif de scannage (40) avec les caractéristiques suivantes:
- un boîtier (43) avec plusieurs scanners (41) superposés;
- un moyen de détection de la destination d'un dispositif de transport (10), le moyen étant relié à l'unité d'évaluation (50);
- une unité d'évaluation (50) pour évaluer les signaux détectés par les scanners (41), l'unité d'évaluation comprenant des moyens de calcul pour comparer avec la destination du dispositif de transport (10) les destinations des objets (20) qui ont été détectées et
- un moyen d'alarme pour produire un premier signal A dans le cas où il ressort de la comparaison qu'une destination d'un objet (20) qui a été détectée ne coïncide pas avec la destination du dispositif de transport et
- plusieurs barrières lumineuses superposées (42), le nombre des barrières lumineuses correspondant au moins au nombre des scanners (41);
- un moyen pour détecter la taille d'un objet (20),
- une unité d'évaluation (50) avec des moyens de calcul pour comparer avec la taille des objets détectés (20) une hauteur de chargement de l'objet (20) détectée au moyen des barrières lumineuses;
- un moyen d'alarme pour produire un deuxième signal B dans le cas où il résulte de la comparaison qu'un objet détecté ne comporte aucun moyen d'identification (30) ou comporte un moyen d'identification (30) non lisible.

21. Dispositif selon la revendication 20, **caractérisé en ce que** le dispositif de scannage (40) est relié à un appareil d'affichage (60) et l'unité d'évaluation (50) comporte des moyens de calcul pour déterminer et représenter sur l'appareil d'affichage un objet (20) dont la destination ne correspond pas à la destination du dispositif de transport (10) et/ou qui ne comporte aucun moyen d'identification (30) ou aucun moyen d'identification (30) lisible.

22. Dispositif selon l'une ou les deux revendications 20 et 21, **caractérisé en ce que** le dispositif de scannage (40) comporte des moyens d'espacement (80) pour faire passer le dispositif de transport (10) à une distance prédéterminée du boîtier (43).

23. Dispositif selon la revendication 22, **caractérisé en ce que** les moyens d'espacement (80) sont un pare-chocs allongé et distant du boîtier (43), à hauteur duquel le dispositif de transport (10) est tiré manuellement lors de l'exécution du procédé.

24. Dispositif selon la revendication 22, **caractérisé en ce que** les moyens d'espacement (80) sont deux rainures de guidage à distance du boîtier (43), dans lesquelles des routes du dispositif de transport (10) sont tirées manuellement lors de l'exécution du procédé.

25. Dispositif selon l'une ou plusieurs des revendications 20 à 24, **caractérisé en ce que** le moyen de détection de la destination d'un dispositif de transport (10) est un scanner séparé (44) qui se trouve sur le boîtier (43) ou qui, en tant que composant mobile, est détaché du boîtier (43).
